**Europäisches Patentamt**

**European Patent Office**

**Office européen des brevets**

(19)

(11) Veröffentlichungsnummer: **0 218 802 B1**

# EUROPÄISCHE PATENTSCHRIFT

(45) Veröffentlichungstag der Patentschrift: **10.04.91**

(51) Int. Cl.⁵: **B29B 7/76**

(21) Anmeldenummer: **86109231.0**

(22) Anmeldetag: **07.07.86**

(54) **Vorrichtung zum Erzeugen eines vorzugsweise chemisch reaktionsfähigen Gemisches aus mindestens zwei Kunststoffkomponenten.**

(30) Priorität: **12.07.85 DE 3525004**

(43) Veröffentlichungstag der Anmeldung:
**22.04.87 Patentblatt 87/17**

(45) Bekanntmachung des Hinweises auf die
Patenterteilung:
**10.04.91 Patentblatt 91/15**

(84) Benannte Vertragsstaaten:
**AT BE CH FR GB IT LI LU NL SE**

(56) Entgegenhaltungen:
**WO-A-82/03797**

(73) Patentinhaber: **Krauss-Maffei Aktiengesellschaft
Krauss-Maffei-Strasse 2
W-8000 München 50(DE)**

(72) Erfinder: **Bauer, Adolf, Ing. grad.
Heideweg 24 b
W-8037 Olching(DE)**

**Beschreibung**

Die Erfindung bezieht sich auf eine Vorrichtung nach dem Oberbegriff des Patentanspruchs 1 bzw. des Patentanspruchs 7.

Eine Vorrichtung dieser Art ist aus der DE-PS 12 82 522 bekannt, bei der in der Mantelfläche des Steuerkolbens axial verlaufende Überströmkanäle angeordnet sind, durch die die Eintrittsöffnungen der Zuführungsleitungen in der Rezirkulationsstellung des Steuerkolbens mit den zugehörigen Rückführungsleitungen verbindbar sind. Bedingt durch die Forderung nach einer kleinen Mischkammer hat der Steuerkolben einen verhältnismäßig geringen Durchmesser, so daß bei der Anordnung von zwei einander gegenüberliegenden Überströmkanälen mit möglichst großem Durchströmquerschnitt zwischen den Überströmkanälen im Steuerkolben nur noch eine dünne Trennwand verbleiben kann. Dabei besteht die Gefahr, daß diese Zwischenwand unter der Wirkung der mit hohem Druck in die Überströmkanäle einschießenden Kunststoffkomponenten erodiert und durchbricht, eine Gefahr, die insbesondere bei mit Füllstoffen beladenen Kunststoffkomponenten gegeben ist. Darüberhinaus sind die axialen Überströmnuten strömungstechnisch ungünstig, da die unter hohem Druck geförderten Komponenten zweimal um 90° umgelenkt werden müssen, wodurch sich durch innere Reibung eine unerwünschte Erwärmung der Komponenten ergibt und eine Beschädigung von Füllstoffbestandteilen, beispielsweise ein Zerbrechen von Glasfaserteilchen, erfolgen kann.

Aufgrund der Forderung nach möglichst großen Querschnittsflächen für die Überströmkanäle verbleibt zwischen zwei einander gegenüberliegenden Überströmkanälen nur eine verhältnismäßig geringe Mantelfläche im Steuerkolben, so daß sich in Umfangsrichtung mit der Zylinderwandung nur ein kurzer Dichtspalt ergibt. Dabei besteht die Gefahr, daß die unter hohem Druck stehenden Kunststoffkomponenten über die Überströmkanäle überströmen und an unerwünschten Stellen unkontrolliert ausreagieren.

Aus der deutschen Offenlegungsschrift 30 19 548 ist es bereits auch bekannt eine möglichst kleine Mischkammer und möglichst große Rezirkulationsnuten dadurch zu schaffen, daß der Steuerkolben im Durchmesser abgestuft ist, wobei die Rezirkulationsnuten im Steuerkolbenteil mit dem größeren Durchmesser angeordnet sind und von den Zulaufkanälen für die Einspritzöffnungen Rücklaufkanäle abzweigen. Bei dieser Ausführungsform besteht jedoch die Gefahr, daß in der Abstufung sich absetzendes Material die Steuerungsfunktion des Steuerkolbens beeinträchtigt.

Der Erfindung liegt die Aufgabe zugrunde, eine Mischvorrichtung der eingangs genannten Gattung zu schaffen, die in der Rezirkulationsstellung für mindest eine Kunststoffkomponente eine strömungswiderstandsfreie Überleitung der Kunststoffkomponente von der Zuführungsleitung in die Rückführungsleitung sicherstellt.

Diese Aufgabe wird durch die kennzeichnenden Merkmale des Patentanspruchs 1 bzw. des Patentanspruchs 7 gelöst.

In der Rezirkulationsstellung wird die Komponente von der Zuführungsleitung ohne Hindernis in die fluchtend zur Zuführungsleitung angeordnete Rückführungsleitung übergeleitet, wobei sich der Vorteil ergibt, daß die Zu- und Rückführungsleitung durch im Steuerkolben oder im Zylinder angeordnete Ringdichtungen abgedichtet werden kann. Damit läßt sich mit einfachen Mitteln sicherstellen, daß von der Zu- und Rückführungsleitung der einen Komponente keine Komponentenbestandteile in den Bereich einer anderen, axial versetzten und eine andere Komponente führenden Zu- und Rückführungsleitung gelangen kann.

Weitere vorteilhafte Ausgestaltungen und Weiterbildungen ergeben sich aus den Unteransprüchen.

Die Erfindung wird anhand von in der Zeichnung dargestellten Ausführungsbeispielen näher beschrieben.

Es zeigen:

Fig. 1    einen Schnitt durch eine Mischkammer mit einem in Rezirkulationsstellung befindlichen Steuerkolben mit abgestufter Stirnfläche,

Fig. 2    einen Schnitt gemäß der Schnittlinie II-II in Fig. 1,

Fig. 3    einen Schnitt durch eine Mischkammer mit einem in der Mischstellung befindlichen Steuerkolben mit abgestufter Stirnfläche,

Fig. 4    einen Schnitt durch eine Mischkammer mit einem in Rezirkulationsstellung befindlichen Steuerkolben mit einer axialen Rezirkulationsnut,

Fig. 5    einen Schnitt gemäß der Schnittlinie V-V in Fig. 4,

Fig. 6    einen Schnitt durch eine Mischkammer mit einem in Rezirkulationsstellung befindlichen Steuerkolben und mit einer zu der Zuführungsleitung einer Komponente axial versetzt angeordneten Rückführungsleitung,

Fig. 7    einen Schnitt gemäß der Schnittlinie VII-VII in Fig. 6,

Fig. 8    einen Schnitt durch eine Mischkammer mit einem Steuerkolben in Mischstellung, wobei sämtliche Rückführungsleitungen fluchtend zu den zugeordneten Zuführungsleitungen angeordnet sind und

Fig. 9 einen Schnitt gemäß der Schnittlinie in Fig. 7.

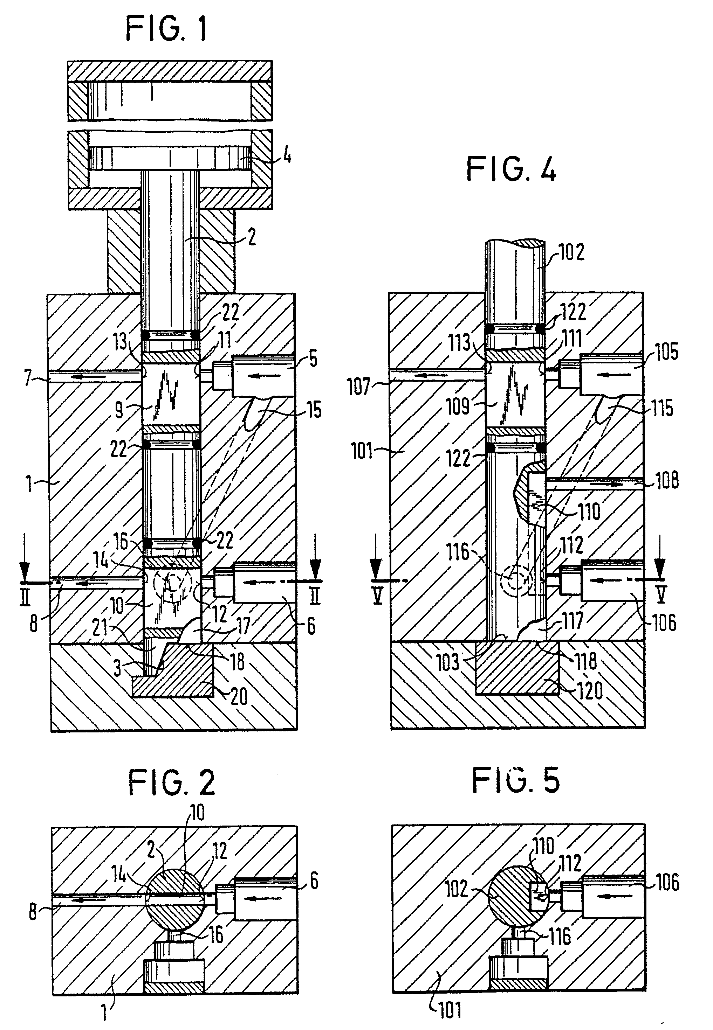

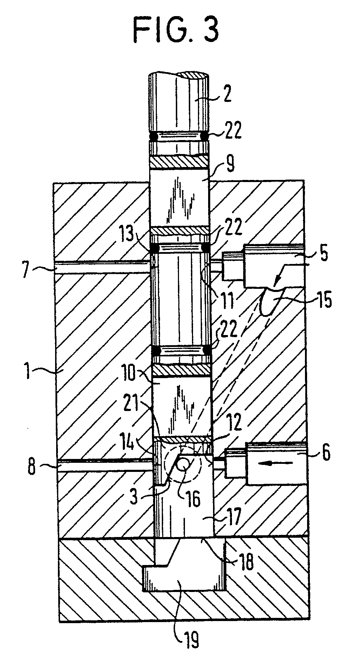

Die Figuren 1 bis 3 zeigen ein Mischkammergehäuse 1, in dem ein Steuerkolben 2 mit abgestufter Stirnfläche 3 zwischen einer Rezirkulationsstellung (Fign. 1 und 2) und einer Mischstellung (Fig. 3) mittels eines Arbeitskolbens 4 hin und her bewegbar ist. Das Mischkammergehäuse 1 enthält ferner zwei Zuführungsleitungen 5 und 6 sowie zwei diesen zugeordnete Rückführungsleitungen 7 und 8. Der Steuerkolben 2 enthält radiale Schlitze 9 und 10 durch die die Ausmündungsöffnungen 11 und 12 der Zuführungsleitungen 5 und 6 in der Rezirkulationsstellung nach den Figuren 1 und 2 ohne Strömungshindernis den Einmündungsöffnungen 13 und 14 unmittelbar und in fluchtender Anordnung gegenüberliegen. Von der Zuführungsleitung 5 zweigt eine Nebenschlußleitung 15 ab und mündet in der radialen Ebene der Zuführungsleitung 6 mit einer Eintrittsöffnung 16 in die Mischkammer 17 (Fig. 3). An die Mischkammeraustrittsöffnung 18 schließt im rechten Winkel ein Umlenkkanal 19 an, in dem ein Umlenkkolben 20 hin und her bewegbar ist. Die Stirnfläche 3 des Steuerkolbens 2 enthält eine Stufe 21, mit der die Rückführungsleitung 8 in der Mischstellung geschlossen gehalten wird. Die Mischkammeraustrittsöffnung 18 und ein bestimmter Umfangsbereich der Querschnittsfläche des Umlenkkanals 19 sind der abgestuften Stirnfläche 3 des Steuerkolbens 2 angepaßt. Jeweils axial zu beiden Seiten der Radialschlitze 9 und 10 sind Ringdichtungen 22 im Steuerkolben 2 angeordnet.

In der Rezirkulationsstellung, in der der Steuerkolben 2 mit seiner abgestuften Stirnfläche 3 die Mischkammer-Austrittsöffnung 18 abschließt, wird die in der Zuführungsleitung 5 geführte Kunststoffkomponente ohne nennenswerten Strömungswiderstand aus der Ausmündungsöffnung 11 über den Radialschlitz 9 unmittelbar in die Einmündungsöffnung 13 der Rückführungsleitung 7 übergeleitet. Aufgrund der fluchtenden Anordnung von Zuführungsleitung 5, Ausmündungsöffnung 11, Radialschlitz 9, Einmündungsöffnung 13 und Rückführungsleitung 7 existieren keine Prallflächen, an denen das Material der Funktionselemente durch die unter hohem Druck und gegebenenfalls mit abrasivem Füllstoffmaterial beladene Kunststoffkomponente erodieren könnte.

In analoger Weise wird in der Rezirkulationsstellung des Steuerkolbens 2 die Komponente aus der Zuführungsleitung 6 über den Radialschlitz 10 in die Rückführungsleitung 8 zurückgeleitet. Die Eintrittsöffnung 16 der Nebenschlußleitung 15 ist dabei von der Mantelfläche des Steuerkolbens 2 geschlossen.

In der Mischstellung, in der der Steuerkolben 2 soweit zurückgezogen ist, daß er die Mischkammer 17 bildet und die Ausmündungsöffnung 12 der Zuführungsleitung 6 und die Eintrittsöffnung 16 der Nebenschlußleitung 15 öffnet, sind die Ausmündungsöffnung 11 der Zuführungsleitung 6 und die Rückführungsleitungen 7 und 8 geschlossen, wobei die Rückführungsleitung 8 von der Stufe 21 verschlossen wird, die mischkammerseitig eine erwünschte, den Mischeffekt steigernde Verkleinerung der Mischkammer 17 im unmittelbaren Einspritzbereich ergibt.

Die Figuren 4 und 5 zeigen ein Mischkammergehäuse 101 mit einem Steuerkolben 102 mit ebener Stirnfläche 103 in der Rezirkulationsstellung, in der die von der Mischkammer-Austrittsöffnung 118 weiter entfernten Zu- und Rückführungsleitungen 105 und 107 über den Radialschlitz 109 in Verbindung stehen.

Die zur Mischkammer-Austrittsöffnung 118 näher angeordneten Zu- und Rückführungsleitungen 106 und 108 liegen übereinander und stehen über eine in der Mantelfläche des Steuerkolbens 102 ausgebildete axiale Rezirkulationsnut 110 in Verbindung. Bei dieser Ausführungsform wird vorzugsweise die mit abrasivem Füllstoffmaterial beladene Kunststoffkomponente über die Zu- und Rückführungsleitungen 105 und 107 geleitet, da wegen des geradlinigen Rezirkulationsweges keine Strömungshindernisse gegeben sind. Im Gegensatz hierzu stellt die an sich bekannte Rezirkulationsnut 110 einen ungünstigeren Strömungsweg dar, da sich in diesem wegen der zweimaligen Umlenkung die unter hohem Druck geförderte Kunststoffkomponente unzulässig erwärmen kann und zudem die Gefahr besteht, daß die im scharfen Strahl auf den Grund der Rezirkulationsnut 110 auftreffende Komponente zu einer Oberflächenerosion führen kann.

Desgleichen besteht die Gefahr, daß dabei Füllstoffbestandteile wie z.B. Glasfasern zerbrechen. In der Mischstellung (nicht dargestellt) ist der Steuerkolben 102 zurückgezogen und öffnet die Ausmündungsöffnung 112 und die Eintrittsöffnung 116, wobei die Rückführungsleitung 107 und die Zuführungsleitung 105 von der Mantelfläche des Steuerkolbens 102 verschlossen wird.

Gleichzeitig wird die Komponente aus der Zuführungsleitung 105 in die Nebenschlußleitung 115 umgeleitet und über die Eintrittsöffnung 116 in die Mischkammer eingespritzt. In der Mischstellung ist der rechtwinkelig an die Mischkammer anschließende Umlenkkanal ebenfalls geöffnet, der nach Beendigung der Mischphase und nach dem Austreiben des Kunststoffgemisches aus der Mischkammer durch den Steuerkolben 102 durch den Umlenkkolben 120 gereinigt wird.

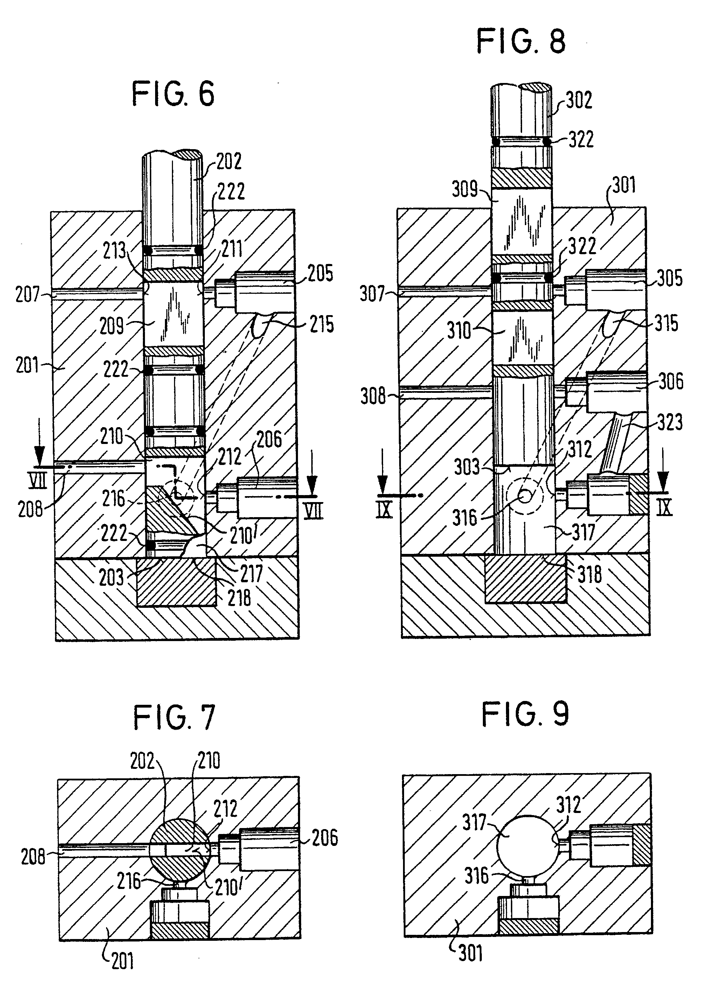

Die Figuren 6 und 7 zeigen ein Mischkammergehäuse 201 mit einem Steuerkolben 202 mit ebener Stirnfläche 203 in der Rezirkulationsstellung, in der die Zu- und Rückführungsleitungen 205 und 206 sowie 207 und 203 über die Radialschlitze 209 und 210 in Verbindung stehen.

Im Gegensatz zu den zueinander fluchtend angeordneten Zu- und Rückführungsleitungen 205 und 207 liegen die Zu- und Rückführungsleitungen 206 und 208 axial versetzt zueinander, so daß nach dem Zurückziehen des Steuerkolbens 202 in die Mischstellung die Zuführungsleitung 205 und die Rückführungsleitungen 207 und 208 von der Mantelfläche des Steuerkolbens 202 verschlossen werden und die Ausmündungsöffnung 212 und die mit der Zuführungsleitung 205 über die Nebenschlußleitung 215 in Verbindung stehende Eintrittsöffnung 216 geöffnet werden. Durch den axialen Versatz der Rückführungsleitung 208 kann somit bei ebener Stirnfläche 203 des Steuerkolbens 202 in der Mischstellung (nicht dargestellt) ein Verschluß der der Mischkammer-Austrittsöffnung 218 näher gelegenen Rückführlei tung 208 erzielt werden. Vorteilhafterweise ist dabei der Radialschlitz 210 mit einer Umlenkfläche 210' versehen, durch welche die aus der Zuführungsleitung 206 austretende Kunststoffkomponente in die Richtung der Rückführungsleitung 208 umgelenkt werden kann.

Die Figuren 8 und 9 zeigen ein Mischkammergehäuse 301 mit einem Steuerkolben 302 mit ebener Stirnfläche 303 in der Mischstellung, in der die Zuführungsleitungen 305 und 306 und die Rückführungsleitungen 307 und 308 durch die Mantelfläche des Steuerkolbens 302 verschlossen sind. In dieser Ausführungsform sind beide Rückführungsleitungen 307 und 308 fluchtend zu den Zuführungsleitungen 305 und 306 angeordnet und in der Rezirkulationsstellung (nicht dargestellt) über Radialschlitze 309 und 310 miteinander verbindbar. Beide Zuführungsleitungen 305 und 306 sind mit Nebenschlußleitungen 315 und 323 versehen, die über Eintrittsöffnungen 316 und 312 in die Mischkammer 317 einmünden.

Die vorstehend beschriebenen Ausführungsformen enthalten lediglich Zuführungsleitungen für zwei Kunststoffkomponenten, jedoch ist die Zahl der Zuführungsleitungen mit fluchtend angeordneten Rückführungsleitungen und von den Zuführungsleitungen abzweigenden Nebenschlußleitungen nicht beschränkt. Beispielsweise könnten in der Ausführungsform nach den Figuren 8 und 9 auch vier Kunststoff komponenten über im Winkel von 90° zueinander angeordnete Eintrittsöffnungen in die Mischkammer eingespritzt werden, wobei die Eintrittsöffnungen jeweils über eine Nebenschlußleitung mit der zugeordneten Zuführungsleitung in Verbindung stehen.

Die Radialschlitze 9, 10; 109; 209, 210; 309, 310 sind in Form von den Steuerkolben mittig und in axialer Erstreckung durchsetzenden Längsschlitzen ausgebildet. Grundsätzlich sind zu diesem Zweck auch andere Formen von Durchlässen geeignet, wie z.B. die Mantelfläche des Steuerkolbens quer durchsetzende Einschnitte, die geeignet sind, in der Rezirkulationsstellung des Steuerkolbens eine hindernisfreie Durchströmung zwischen Zuführungsleitung und Rückführungsleitung zu gewährleisten.

Eine weitere Form eines Durchlasses kann aus einer in der Mantelfläche ausgebildeten Ringnut bestehen, durch die die Komponente in der Rezirkulationsstellung aus der Zuführungsleitung in zwei Teilströme aufgeteilt wird, die sich beim Eintreten in die Rückführungsleitung wieder vereinen.

## Ansprüche

1. Vorrichtung zum Erzeugen eines vorzugsweise chemisch reaktionsfähigen Gemisches aus mindestens zwei Kunststoffkomponenten mit einer Mischkammer in welche Zuführungsleitungen für die Komponenten einmünden und Rückführungsleitungen ausmünden und die eine Austrittsöffnung für das Kunststoffkomponentengemisch aufweist und mit einem innerhalb der Mischkammer hin und her bewegbaren Steuer- und Verdrängerkolben, welcher in einer Rezirkulationsstellung die Zu- und Rückführleitungen jeder Komponente miteinander verbindet und in einer Mischstellung den Eintritt in die Mischkammer freigibt, **dadurch gekennzeichnet**, daß die Ausmündungsöffnungen (11, 12; 111, 112; 211, 212) für die Zuführungsleitungen (5, 6; 105, 106; 205, 206) der Komponenten in unterschiedlichen radialen Ebenen der Mischkammer (17; 117; 217) liegen und daß zumindest die Einmündungsöffnungen (13; 113; 213) einer oder mehrerer der der Mischkammer-Austrittsöffnung (18; 118; 218) weiter entfernten Rücklaufleitungen (7; 107; 207) etwa in der gleichen radialen Ebene wie die Ausmündungsöffnungen (11, 211, 311) der zugeordneten Zuführungsleitung (5, 105, 205) liegen, wobei wenigstens ein Radialschlitz (9, 10; 109; 209) oder eine Umfangsnut des Steuerkolbens (2; 102; 202) in dessen Rezirkulationsstellung die in der gleichen radialen Ebene liegenden Zu- und Rücklaufleitungen (5; 105; 205 und 7; 107; 207) verbindet, und daß von den, der Mischkammer-Austrittsöffnung (18; 118; 218) weiter entfernten Zulaufleitungen (5; 105; 205) jeweils eine Nebenschlußleitung (15; 115; 215) abzweigt, welche in einer radialen Ebene in die Mischkammer (17; 117; 217) einmündet, die der radialen Ebene derjenigen Zulaufleitung (6; 106; 206) entspricht, die der MischkammerAustrittsöffnung (18; 118; 218) am nächsten liegt, wobei die Nebenschlußleitung (15; 115; 215) in der Rezirkulationsstellung des Steuerkolbens (2; 102; 202) von dessen Mantelfläche geschlossen sind und in der Mischstellung des Steuerkolbens (2; 102; 202) gleichzeitig mit der der Mischkammer-Austrittsöffnung (18; 118; 218) am nächsten liegenden Zuführungsleitung (6; 106; 206) geöffnet sind.

2. Vorrichtung nach Anspruch 1, **dadurch gekennzeichnet,** daß die der MischkammerAustrittsöffnung (18) am nächsten liegende Zuführungsleitung (6) und deren zugeordnete Rückführungsleitung (8) etwa in derselben radialen Ebene liegen und in der Rezirkulationsstellung des Steuerkolbens (2) über einen Radialschlitz (10) miteinander verbunden sind und daß die Stirnfläche (3) des Steuerkolbens (2) abgestuft ist, derart, daß in der Mischstellung des Steuerkolbens (2) die der Mischkammer-Austrittsöffnung (18) am nächsten liegende Zuführungsleitung (6) und die Nebenschlußleitung (15) gleichzeitig geöffnet und die Rückführungsleitungen (7, 8) geschlossen sind.

3. Vorrichtung nach Anspruch 2, **dadurch gekennzeichnet,** daß sich an die Mischkammer (17) in einem vorzugsweise rechten Winkel ein Umlenkkanal (19) mit einer Querschnittsform anschließt, die in einem Umfangbereich der Form der abgestuften Stirnfläche (3) des Steuerkolbens (2) entspricht, derart, daß in der Rezirkulationsstellung die Mischkammer-Austrittsöffnung (18) von der abgestuften Stirnfläche (3) des Steuerkolbens (2) bündig abgeschlossen ist und einen seitlich vollkommen geschlossenen Umlenkkanal (19) bildet, in dem ein Umlenkkolben (20) mit einer der Querschnittsform des Umlenkkanals (19) entsprechenden Querschnittsform hin und her bewegbar ist.

4. Vorrichtung nach einem der Ansprüche 1, bis 3 **dadurch gekennzeichnet,** daß die der Mischkammer-Austrittsöffnung (118) am nächsten liegende Zuführungsleitung (106) und deren zugeordnete Rückführungsleitung (108) in unterschiedlichen radialen Ebenen liegen und in der Rezirkulationsstellung des Steuerkolbens (102) in an sich bekannter Weise über eine axiale Rezirkulationsnut (110) in der Mantelfläche des Steuerkolbens (102) miteinander verbunden sind.

5. Vorrichtung nach Anspruch 1, **dadurch gekennzeichnet,** daß die der Mischkammer-Austrittsöffnung (218) am nächsten liegende Zuführungsleitung (206) und deren zugeordnete Rückführungsleitung (208) in unterschiedlichen, jedoch eng benachbarten radialen Ebenen liegen und in der Rezirkulationsstellung des Steuerkolbens (202) über einen zugeordneten Radialschlitz (210) miteinander verbunden sind, wobei der axiale Versatz zwischen der Zuführungsleitung (206) und der Rückführungsleitung (208) derart bemessen ist, daß bei einer ebenen Stirnfläche (203) des Steuerkolbens (202) in dessen Mischstellung die der Mischkammer-Austrittsöffnung (218) am nächsten liegende Zuführungs leitung (212) und die Nebenschlußleitung (215) gleichzeitig geöffnet und die Rückführungsleitungen (207, 208) geschlossen sind.

6. Vorrichtung nach einem der Ansprüche 1 bis 5 zum Erzeugen eines vorzugsweise chemisch reaktionsfähigen Gemisches aus drei oder mehreren Kunststoffkomponenten, **dadurch gekennzeichnet,** daß die Zu- und Rückführungsleitungen der dritten und jeder weiteren Komponente ebenfalls in etwa in derselben radialen Ebene, jedoch bezüglich der übrigen Zu- und Rückführungsleitungen unter axialem Versatz liegen und über zugeordnete Radialschlitze oder Umfangsnuten des Steuerkolbens in dessen Rezirkulationsstellung miteinander verbunden sind und daß von jeder dritten und weiteren Zuführungsleitung eine Nebenschlußleitung abzweigt, wobei sämtliche Nebenschlußleitungen in der radialen Ebene der der Mischkammer-Austrittsöffnung am nächsten liegenden Zuführungsleitung einmünden.

7. Vorrichtung zum Erzeugen eines vorzugsweise chemisch reaktionsfähigen Gemisches aus mindestens zwei Kunststoffkomponenten mit einer Mischkammer, in welche Zuführungsleitungen für die Komponenten einmünden und Rückführungsleitungen ausmünden und die eine Austrittsöffnung für das Kunststoffkomponentengemisch aufweist und mit einem innerhalb der Mischkammer hin und her bewegbaren Steuer- und Verdrängerkolben, welcher in einer Rezirkulationsstellung die Zu- und Rücklaufleitungen jeder Komponente mit einander verbindet und in einer Mischstellung den Eintritt in die Mischkammer freigibt, **dadurch gekennzeichnet,** daß die Zu- und Rückführungsleitungen (305, 306; 307, 308) der Komponenten jeweils in etwa in derselben radialen Ebene, jedoch bezüglich der anderen bzw. weiteren Zu- und Rückführungsleitungen unter axialem Versatz liegen und über zugeordnete Radialschlitze (309, 310) oder Umfangsnuten des Steuerkolbens (302) in dessen Rezirkulationsstellung miteinander verbunden sind und daß von jeder Zuführungsleitung (305, 306) eine Nebenschlußleitung (315, 323) abzweigt, die in einer radialen Ebene in die Mischkammer (317) einmünden, die zwischen der Mischkammer-Austrittsöffnung (318) und der der Mischkammer-Austrittsöffnung am nächsten liegenden Zuführungsleitung (306) liegt, wobei in der Mischstellung die Verbindung zwischen einander zugehörigen Zu- und Rückführungsleitungen (305, 306; 307, 308) unterbrochen und die Einmündungen der Nebenschlußleitungen (315, 323) in die Mischkammer (317) gleichzeitig geöffnet sind.

8. Vorrichtung nach einem der Ansprüche 1 bis 7, **dadurch gekennzeichnet**, daß jede Nebenschlußleitung (15; 115; 215; 315, 323) über eine Druckmindereinrichtung in Abhängigkeit von der Stellung des Steuerkolbens (2; 102; 202; 302) steuerbar ist, derart, daß die Nebenschlußleitungen nur in der Mischstellung des Steuerkolbens vollständig geöffnet sind.

9. Vorrichtung nach einem der Ansprüche 1 bis 8, **dadurch gekennzeichnet,** daß wenigstens bei den von der Mischkammer-Austrittsöffnung (18; 118; 218; 318) weiter entfernten Zu- und Rückführungsleitungen(5; 105; 205; 305 und 7; 107; 207; 307) die einander zugeordneten Zu- und Rückführungsleitungen zueinander fluchtend angeordnet sind und die Radialschlitze mindestens die Weite der Strömungsquerschnitte der Zu- und Rückführungsleitung aufweisen.

10. Vorrichtung nach einem der Ansprüche 1 bis 9, **dadurch gekennzeichnet,** daß axial zu beiden Seiten der Radialschlitze (9, 10; 109; 209, 210;; 309, 310) oder der Umfangsnuten im Steuerkolben (2; 102; 202; 302) Ringdichtungen (22; 122; 222, 322) angeordnet sind.

**Claims**

1. Apparatus for producing a preferably chemically reactive mixture from at least two synthetic components with a mixing chamber into which supply lines for the components open and from which return lines discharge and which comprises an outlet opening for the synthetic component mixture and with a control and displacement piston able to move to and fro within the mixing chamber, which piston, in a recirculation position, connects the supply and return lines for each component to each other and in a mixing position allows admission to the mixing chamber, characterised in that the discharge openings (11,12; 111,112; 211,212) for the supply lines (5,6; 105, 106; 205, 206) of the components lie in different radial planes of the mixing chamber (17; 117; 217) and that at least the inlet openings (13; 113; 213) of one or more of the return lines (7; 107; 207) further away from the mixing chamber outlet opening (18; 118; 218) lie approximately in the same radial plane as the discharge openings (11, 211, 311) of the associated supply lines (5, 105, 205), at least one radial slot (9,10;109; 209) or one peripheral groove of the control piston (2; 102; 202), in its recirculation position, connecting the supply and return lines (5; 105; 205 and 7; 107; 207) lying in the same radial plane and that branching from the supply lines (5; 105; 205) further away from the mixing chamber outlet opening (18; 118; 218) is a bypass line (15; 115; 215), which opens into the mixing chamber (17; 117; 217) in a radial plane, which corresponds to the radial plane of the supply line (6; 106; 206), which lies closest to the mixing chamber outlet opening (18; 118; 218), in the re-circulation position of the control piston (2; 102; 202), the bypass line (15; 115; 215) being closed by its surface and in the mixing position of the control piston (2; 102; 202) being open at the same time as the supply line (6; 106; 206) located closest to the mixing chamber outlet opening (18; 118; 218).

2. Apparatus according to Claim 1, characterised in that the supply line (6) located closest to the mixing chamber outlet opening (18) and its associated return line (8) lie approximately in the same radial plane and in the recirculation position of the control piston (2), are connected to each other by way of a radial slot (10) and that the end face (3) of the control piston (2) is stepped so that in the mixing position of the control piston (2), the supply line (6) lying closest to the mixing chamber outlet opening (18) and the bypass line (15) are simultaneously open and the return lines (7, 8) are closed.

3. Apparatus according to Claim 2, characterised in that adjoining the mixing chamber (17) preferably at a right angle is a deflection channel (19) with a cross sectional shape which in one peripheral region corresponds to the shape of the stepped end face (3) of the control piston (2) so that in the recirculation position, the mixing chamber outlet opening (18) is closed off in a flush manner by the stepped end face (3) of the control piston (2) and forms a deflection channel (19) completely closed at the side, in which a deflection piston (20) with a cross sectional shape corresponding to the cross sectional shape of the deflection channel (19) is able to move to and fro.

4. Apparatus according to one of Claims 1 to 3, characterised in that the supply line (106) lying closest to the mixing chamber outlet opening 8118) and its associated return line (108) lie in different radial planes and in the recirculation position of the control piston (102), are connected to each other in manner known per se by way of an axial recirculation groove (110) in the surface of the control piston (102).

5. Apparatus according to Claim 1, characterised in that the supply line (206) located closest to the mixing chamber outlet opening (218) and its associated return line (208) lie in different, but closely adjacent radial planes and in the recirculation position of the control piston (202), are connected to each other by way of an associated radial slot (210), the axial misalignment between the supply line (206) and the return line (208) being dimensioned such that in the case of a flat end face (203) of the control piston (202), in its mixing position, the supply line (212) lying closest to the mixing chamber outlet opening (218) and the bypass line (215) are open simultaneously and the return lines (207, 208) are closed.

6. Apparatus according to one of Claims 1 to 5 for producing a preferably chemically reactive mixture from three or more synthetic components, characterised in that the supply and return lines of the third and each additional component likewise lie in approximately the same radial plane, however with an axial misalignment with respect to the other supply and return lines and are connected to each other by way of associated radial slots or peripheral grooves in the control piston, in its recirculation position and that a bypass line branches from each third and additional supply line, all the bypass lines opening out in the radial plane of the supply line lying closest to the mixing chamber outlet opening.

7. Apparatus for producing a preferably chemically reactive mixture from at least two synthetic components with a mixing chamber, into which open supply lines for the components and from which return lines discharge and which comprises an outlet opening for the synthetic component mixture and with a control and displacement piston able to move to and fro within the mixing chamber, which piston, in a recirculation position, connects the supply lines and return lines for each component to each other and in a mixing position allows admission to the mixing chamber, characterised in that the supply and return lines (305, 306; 307 308) of the components in each case lie in approximately the same radial plane, but with an axial misalignment with respect to the other or additional supply and return lines and are connected to each other by way of associated radial slots (309, 310) or peripheral grooves in the control piston (302) in its recirculation position and that branching from each supply line (305, 306) is a bypass line (315,323), which opens in a radial plane into the mixing chamber (317), which lies between the mixing chamber outlet opening (318) and the supply line (306) located closest to the mixing chamber outlet opening, in the mixing position, the connection between associated supply and return lines (305, 306; 307, 308) being interrupted and the openings of the bypass lines (315, 323) into the mixing chamber (317) being opened simultaneously.

8. Apparatus according to one of Claims 1 to 7, characterised in that each bypass line (15; 115; 215; 315, 323) is controllable by way of a pressure reduction device, depending on the position of the control piston (2; 102; 202; 302) so that the bypass lines are completely open solely in the mixing position of the control piston.

9. Apparatus according to one of Claims 1 to 8, characterised in that at least in the case of the supply and return lines (5; 105; 205; 305 and 7; 107; 207; 307) further away from the mixing chamber outlet opening (18; 118; 218; 318) the associated supply and return lines are arranged to align one with the other and the radial slots have at least the width of the flow cross section of the supply and return line.

10. Apparatus according to one of Claims 1 to 9, characterised in that annular gaskets (22; 122; 222, 322) are arranged axially on both sides of the radial slots (9,10; 109; 209, 210; 309, 310) or the peripheral grooves in the control piston (2; 102; 202; 302).

**Revendications**

1. Dispositif pour la formation d'un mélange, capable de préférence de réagir chimiquement, d'au moins deux composants générateurs d'une matière plastique, ce dispositif comportant une chambre de mélangeage dans laquelle débouchent des conduits d'alimentation en les composants et sortent des conduits de recyclage, ce dispositif présentant un orifice de sortie du mélange des composants générateurs d'une matière plastique ainsi qu'un piston pouvant être animé d'un mouvement alternatif de va-et-vient à l'intérieur de la chambre de mélangeage, pour la distribution et le refoulement (de la matière plastique), et qui, en position de recirculation, relie les uns aux autres les conduits d'alimentation et de recyclage de chaque composant et, en position de mélangeage, dégage l'entrée dans la chambre de mélangeage, dispositif caractérisé en ce que les orifices (11, 12 ; 111, 112 ; 211, 212) constituant le débouché des conduits (5, 6 ; 105, 106 ; 205, 206) d'alimentation en les composants sont situés dans des plans radiaux différents de la chambre (17 ; 117 ; 217) de mélangeage et en ce qu'au moins les orifices (13 ; 113 ; 213) d'entrée d'un ou plusieurs des conduits (7 ; 107 ; 207) de recyclage, plus éloignés de l'orifice (18 ; 118 ; 218) de sortie de la chambre de mélangeage,sont situés approximativement dans le même plan radial que les orifices (11, 211, 311) constituant le débouché des conduits (5, 105, 205) associés d'alimentation, au moins une rainure radiale (9, 10 ; 109 ; 209) ou bien une rainure périphérique du piston distributeur (2 ; 102, 202) reliant, dans la position du piston permettant un recyclage ou une recirculation, les conduits d'alimentation et de recyclage (5 ; 105 ; 205 et 7 ; 107 ; 207) situés dans le même plan radial, et en ce que, des conduits (5 ; 105 ; 205) d'alimentation relativement plus éloignés de l'orifice (18 ; 118 ; 218) de sortie de la chambre de mélangeage part à chaque fois un conduit (15 ; 115 ; 215) de dérivation qui débouche dans la chambre (17 ; 117 ; 217) de mélangeage dans un plan radial corres pondant au plan radial du conduit (6 ; 106 ; 206) d'alimentation situé le plus près de l'orifice (18 ; 118 ; 218) de sortie de la chambre de mélangeage, les conduits (15 ; 115 ; 215) de dérivation étant, dans la position du piston distributeur (2 ; 102 ; 202) autorisant la recirculation, obturés par la surface périphérique de ce piston et étant, dans la position du piston distributeur (2 ; 102 ; 202) autorisant le mélangeage,ouverts ou dégagés en même temps que le conduit (6 ; 106 ; 206) d'alimentation situé le plus près de l'orifice (18 ; 118 ; 218) de sortie de la chambre de mélangeage.

2. Dispositif selon la revendication 1, caractérisé en ce que le conduit (6) d'alimentation situé le plus près de l'orifice (18) de sortie de la chambre de mélangeage, et le conduit (8) de recyclage qui lui est associé,sont situés approximativement dans le même plan radial et, dans la position du piston distributeur (2) autorisant la recirculation, ces conduits communiquent par l'intermédiaire d'une rainure (10) radiale, et en ce que la surface frontale (3) du piston distributeur (2) est étagée de manière que, dans la position du piston distributeur (2) autorisant un mélangeage, le conduit (6) d'alimentation situé le plus près de l'orifice (18) de sortie de la chambre de mélangeage et le conduit (15) de dérivation sont simultanément dégagés et les conduits (7, 8) de recyclage sont fermés.

3. Dispositif selon la revendication 2, caractérisé en ce que la chambre (17) de mélangeage est prolongée par un canal (19) déflecteur, avantageusement à angle droit et présentant une forme de section transversale correspondant, dans une zone périphérique, à la forme de la surface frontale (3) étagée du piston distributeur (2), de sorte qu'en position autorisant la recirculation, l'orifice (18) de sortie de la chambre de mélangeage est obturé par la surface frontale (3) étagée du piston distributeur (2) venant affleurer cette sortie, laquelle forme un canal (19) déflecteur entièrement fermé latéralement et dans lequel un piston (20) déflecteur, présentant une forme de section transversale correspondant à la forme de section transversale du canal (19) déflecteur, peut être animé d'un mouvement alternatif.

4. Dispositif selon l'une des revendications 1 à 3, caractérisé en ce que le conduit (106) d'alimentation situé le plus près de l'orifice (118) de sortie de la chambre de mélangeage, et le conduit (108) de recyclage qui lui est associé, sont situés dans des plans radiaux différents et, lorsque le piston distributeur (102) est dans la position autorisant un recyclage, ces conduits communiquent l'un avec l'autre, de façon connue, par une gorge (110) axiale de recirculation ménagée dans la surface périphérique du piston distributeur (102).

5. Dispositif selon la revendication 1, caractérisé en ce que le conduit (206) d'alimentation le plus proche de l'orifice (218) de sortie de la chambre de mélangeage,et le conduit (208) de recyclage qui lui est associé,sont situés dans des plans radiaux différents mais très proches l'un de l'autre et, dans la position du piston distributeur (202) autorisant le recyclage, ces conduits communiquent par l'intermédiaire d'une rainure (210) radiale associée, le décalage axial entre le conduit (206) d'alimentation et le conduit (208) de recyclage étant tel que, dans le cas d'une surface frontale (203) plane du piston distributeur (202) et lorsque ce piston est dans sa position autorisant le mélangeage, le conduit (212) d'alimentation situé le plus près de l'orifice (218) de sortie de la chambre de mélangeage et le conduit (215) de dérivation sont simultanément ouverts et les conduits (207, 208) de recyclage sont simultanément fermés.

6. Dispositif selon l'une des revendications 1 à 5 pour la formation d'un mélange, capable de préférence de réagir chimiquement, de trois ou de plus de trois composants générateurs d'une matière plastique, dispositif caractérisé en ce que les conduits d'alimentation et de recyclage du troisième composant et de chaque autre composant sont également situés approximativement dans le même plan radial mais avec un décalage axial par rapport aux autres conduits d'alimentation et de recyclage et ces conduits communiquent entre eux, lorsque le piston distributeur est dans sa position autorisant un recyclage, par l'intermédiaire de rainures radiales ou de gorges périphériques, associées, du piston distributeur et en ce qu'un conduit de dérivation part de chaque troisième et autre conduit d'alimentation supplémentaire, tous les conduits de dérivation débouchant dans le plan radial du conduit d'alimentation situé le plus près de l'orifice de sortie de la chambre de mélangeage.

7. Dispositif pour la formation d'un mélange, capable de préférence de réagir chimiquement, d'au moins deux composants générateurs d'une matière plastique, ce dispositif comportant une chambre de mélangeage dans laquelle débouchent des conduits d'alimentation en les composants et d'où sortent des conduits de recyclage, ce dispositif présentant un orifice de sortie du mélange des composants générateurs d'une matière plastique et comportant un piston distributeur et de refoulement pouvant être animé d'un mouvement alternatif à l'intérieur de la chambre de mélangeage, ce piston faisant communiquer, quand il est position de recirculation, les conduits d'alimentation et de recyclage de chaque composant et, quand il est position de mélangeage, ce piston dégageant l'entrée dans la chambre de mélangeage, dispositif caractérisé en ce que les conduits d'alimentation (305, 306) et de recyclage (307, 308) des composants sont chaque fois situés approximativement dans le même plan radial mais en étant axialement décalés de l'autre ou des autres conduits d'alimentation et de recyclage et ces conduits communiquent, lorsque le piston distributeur (302) est dans sa position autorisant une recirculation, par l'intermédiaire de rainures radiales (309, 310) ou de gorges périphériques, associées, du piston distributeur (302), et en ce qu'un conduit de dérivation (315, 323) part de chaque conduit (305, 306) d'alimentation et débouche dans la chambre (317) de mélangeage dans un plan radial situé entre l'orifice (318) de sortie de la chambre de mélangeage et le conduit (306) d'alimentation situé le plus près de cet orifice de sortie de la chambre de mélangeage, de sorte que, dans la position (du piston distributeur) autorisant le mélangeage, la liaison de communication entre les conduits d'alimentation (305, 306) et de recyclage (307, 308) mutuellement associés est interrompue et les débouchés des conduits (315, 323) de dérivation dans la chambre (317) de mélangeage sont simultanément ouverts.

8. Dispositif selon l'une des revendications 1 à 7, caractérisé en ce que chaque conduit (15 ; 115 ; 215 ; 315, 323) de dérivation peut être commandé par l'intermédiaire d'un dispositif d'abaissement de la pression en fonction de la position du piston distributeur (2 ; 102 ; 202 ; 302),de sorte que les conduits de dérivation ne sont pleinement dégagés que lorsque le piston distributeur se trouve dans sa position autorisant un mélangeage.

9. Dispositif selon l'une des revendications 1 à 8, caractérisé en ce qu'au moins pour les conduits d'alimentation et de recyclage (5 ; 105 ; 205 ; 305) et (7 ; 107 ; 207 ; 307) les plus éloignés de l'orifice (18 ; 118 ; 218 ; 318) de sortie de la chambre de mélangeage, les conduits mutuellement associés d'alimentation et de recyclage sont alignés l'un sur l'autre et en ce que les rainures radiales présentent au moins la largeur de la section ou lumière d'écoulement des conduits d'alimentation et de recyclage.

10. Dispositif selon l'une des revendications 1 à 9, caractérisé en ce que des bagues ou joints annulaires d'étanchéité (22 ; 122 ; 222, 322) sont disposé(e)s axialement sur les deux côtés des rainures radiales (9, 10 ; 109 ; 209, 210 ; 309, 310) ou des gorges périphériques du piston distributeur (2 ; 102 ; 202 ; 302).

# FIG. 1

# FIG. 4

# FIG. 2

# FIG. 5

# FIG. 3

FIG. 8

FIG. 6

FIG. 7

FIG. 9